# EUROPÄISCHE PATENTANMELDUNG

(11) **EP 2 030 652 A2**
(43) Veröffentlichungstag der Anmeldung: **04.03.2009**
(21) Anmeldenummer: 08014971.9
(22) Anmeldetag: 25.08.2008
(51) Int. Cl.: A62C 3/16, A62C 2/06

(54) **Kabelabschottung mit modularem Aufbau**

(30) Priorität: 31.08.2007 DE 102007041426; 02.10.2007 DE 102007047367
(71) Anmelder: Rodenberg, Volker, 56291 Leiningen (DE)
(72) Erfinder: Rodenberg, Volker, 56291 Leiningen (DE)
(74) Vertreter: Gesthuysen, von Rohr & Eggert

(57) **Zusammenfassung**

Dargestellt und beschrieben ist eine Kabelabschottung (1) mit modularem Aufbau zum Einsetzen in einen Wand- oder Deckendurchbruch eines Raums für die brandschutzsichere Abschottung von Leitungen, insbesondere elektrischen Kabeln, Rohren oder dergleichen im Bereich des Wand- oder Deckendurchbruchs, aufweisend wenigstens zwei die Wand oder Decke im Bereich des Durchbruchs kanalartig durchsetzende Kabelboxen (2a, 2b), wobei die Kabelboxen (2a, 2b) übereinander und/oder nebeneinander angeordnet sind und jede Kabelbox (2a, 2b) einen Kanal (3a, 3b) zur Durchführung von Leitungen oder Rohren aufweist, wobei die Kanäle (3a, 3b) durch Gehäusewände (4a, 4b, 5a, 5b, 6a, 6b, 7) der Kabelboxen (2a, 2b) gebildet und voneinander getrennt sind und wobei die Kabelboxen (2a, 2b) in ihrer Lage zueinander fixiert und untereinander verbunden sind. Erfindungsgemäß ist vorgesehen, daß wenigstens eine Gehäusewand (4a, 5a) einer ersten Kabelbox (2a) unmittelbar form- und/oder kraftschlüssig mit wenigstens einer Gehäusewand (4b, 5b, 6b) wenigstens einer weiteren Kabelbox (2b) verbunden ist.

## Beschreibung

Die Erfindung betrifft eine Kabelabschottung nach dem Oberbegriff des Anspruchs 1.

Um im Brandfall ein Ausbreiten eines Feuers durch Durchbrüche in Wänden oder Decken zu verhindern, ist es bekannt, in die Durchbrüche Kabelabschottungen einzusetzen, die aus wenigstens einer Kabelbox bestehen, wobei die Kabelbox aus einem an beiden Stirnseiten offenen Metallgehäuse gebildet wird, das an seinen Innenwänden mit einem geeigneten intumeszierenden Material ausgekleidet ist. Das Metallgehäuse muß an die Größe und Form des Durchbruchs bzw. an die Anzahl und Art der Leitungen oder Kabel, die durch den Durchbruch hindurchgeführt werden sollen, angepaßt sein. Demzufolge werden diese Gehäuse mit zahlreichen Querschnittsformen und den verschiedensten Abmessungen hergestellt. Nach dem Verlegen der Leitungen werden die offenen Stirnseiten des Metallgehäuses mit einer Abdeckung verschlossen, die an die Querschnittsform des Gehäuses angepaßt ist. Die für die Kabel erforderlichen Aussparungen werden mechanisch oder thermisch eingebracht. Zur Verhinderung einer eventuellen Rauchgasausbreitung werden die Aussparungen um die Kabel schließlich mit einem elastischen Dichtstoff abgedichtet.

Um unterschiedliche Leitungen, wie beispielsweise Elektro- und Computerkabel, getrennt voneinander in unterschiedlichen Kanälen durch einen Durchbruch hindurchzuführen, sind Kabelabschottungen bekannt, die wenigstens zwei voneinander getrennte Kabelboxen aufweisen, wobei jede Kabelbox einen Kanal zum Durchführen von Leitungen aufweist und durch ein metallisches Gehäuse gebildet wird. Aus sicherheitstechnischen Gründen dürfen die Kabelboxen in Höhe und Breite bestimmte Abmessungen nicht überschreiten. Für die feuersichere Kabelabschottung großer Wand- oder Deckenschlitze, wie sie zum Beispiel häufig in Bürohochhäusern, Industriebauten etc. üblich sind, müssen folglich für einen Wand- oder Deckenschlitz jeweils mehrere Kabelboxen verwendet werden, die nebeneinander und/oder übereinander anzuordnen sind.

Zur Befestigung einer Mehrzahl von Kabelboxen miteinander ist bei einer Kabelabschottung mit modularem Aufbau aus dem Stand der Technik bekannt, Distanzanker zu verwenden, die an beiden Enden Krallenplatten aufweisen, die jeweils über die äußere Kante der metallischen Gehäuse der Kabelboxen greifen, wobei die Krallenplatte eines Distanzankers zwei, drei oder bis zu maximal vier Kabelboxen stirnseitig untereinander verbinden und auf Abstand halten kann. Der zwischen den Kabelboxen verbleibende Spalt wird dann beim Einbau in den Wand- oder Deckendurchbruch mit einem Brandschutzstoff verfüllt. Durch die Verwendung von mit Krallenplatten versehenen Distanzankern können die Kabelboxen untereinander verbunden und so lagefixiert werden, daß sowohl in Längsrichtung als auch in Querrichtung ein vorgegebener Abstand zwischen den Metallgehäusen zweier benachbarter Kabelboxen verbleibt. Von Nachteil ist, daß die Montage der Kabelboxen mittels Distanzankern insbesondere an unzugänglichen Stellen sehr aufwendig ist, was zu höheren Montagekosten der Kabelabschottung beiträgt. Die Kosten zur Herstellung von Distanzankern und die mit dem Vorhalten der Distanzanker verbundenen Lagerkosten tragen zu hohen Herstellungskosten der bekannten Kabelabschottung bei.

Aufgabe der vorliegenden Erfindung ist es, eine Kabelabschottung der eingangs genannten Art zur Verfügung zu stellen, die sich durch eine geringe Teilevielfalt auszeichnet und einfach und kostengünstig herstellbar und montierbar ist.

Die vorgenannte Aufgabe ist bei einer Kabelabschottung der eingangs genannten Art dadurch gelöst, daß wenigstens eine Gehäusewand einer ersten Kabelbox unmittelbar form- und/oder kraftschlüssig mit wenigstens einer Gehäusewand wenigstens einer weiteren Kabelbox verbunden ist. Dabei ist vorgesehen, daß zumindest eine Gehäusewand einer ersten Kabelbox mit einer Gehäusewand einer weiteren Kabelbox zumindest im Bereich der form- und/oder kraftschlüssigen Verbindungsstellen in einem gegenseitigen unmittelbaren Wirkkontakt steht, um eine feste und stabile Verbindung der Gehäusewände zu ermöglichen. Die Verwendung von zusätzlichen Verbindungselementen zur mittelbaren Verbindung der Kabelboxen, wie beispielsweise Distanzankern, ist bei der erfindungsgemäßen Kabelabschottung nicht notwendig, wenngleich aber auch nicht ausgeschlossen.

Die unmittelbare Befestigung der Kabelboxen über die Gehäusewände trägt durch die Einsparung an zusätzlichen Verbindungselementen zu einem einfachen Aufbau und damit zu einer einfachen Montage der erfindungsgemäßen Kabelabschottung bei. Durch die unmittelbare Verbindung der Gehäusewände miteinander wird darüber hinaus eine hohe Stabilität der erfindungsgemäßen Kabelabschottung insbesondere im Brandfall gewährleistet. Zwischen zwei miteinander verbundenen Gehäusewänden kann im übrigen eine intumeszierende Brandschutzmasse vorgesehen sein, um eine feuersichere Abschottung der Kabeldurchführung sicherzustellen.

Es versteht sich, daß die Kabelboxen auch auf den Innenseiten der Gehäusewände eine Beschichtung mit einem intumeszierenden Brandschutzmaterial aufweisen können. Dadurch wird eine feuersichere Abschottung innerhalb der Kabelbox sichergestellt. Bei einem modularen Aufbau der erfindungsgemäßen Kabelabschottung kann vorgesehen sein, daß alle Kabelboxen im wesentlichen gleich ausgebildet sind und die gleiche Querschnittsgröße und Querschnittsform aufweisen, was die Herstellungs- und Lagerhaltungskosten der erfindungsgemäßen Kabelabschottung und den Montageaufwand verringert.

Die in den Unteransprüchen genannten und anhand der nachfolgenden Zeichnung beschriebenen Merkmale betreffen bevorzugte Weiterbildungen der erfindungsgemäßen Kabelabschottung, wobei die Erfindung nicht auf die in der Zeichnung dargestellte Ausführungsform beschränkt ist. Darüber hinaus können bedarfsweise die genannten Merkmale miteinander kombiniert werden, auch wenn dies nicht im einzelnen erläutert ist.

Anhand der Zeichnung wird die Erfindung nachfolgend näher erläutert. In der Zeichnung zeigen
- Fig. 1: eine Explosionsdarstellung einer Kabelabschottung im nicht montierten Grundzustand und
- Fig. 2: eine perspektivische Ansicht der in Fig. 1 dargestellten Kabelab- schottung im Montagezustand, wobei die Kabelabschottung zwei Kabelboxen aufweist.

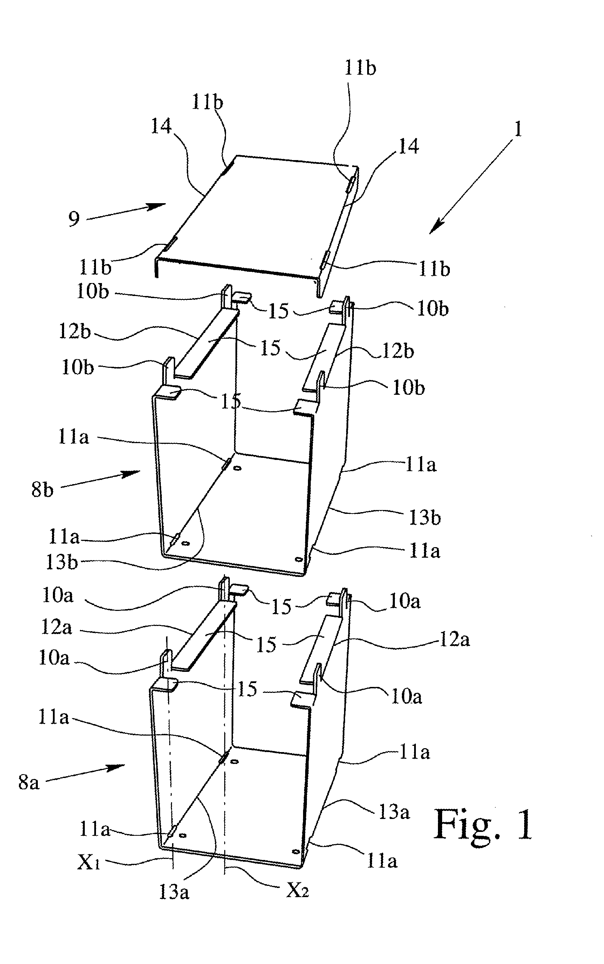

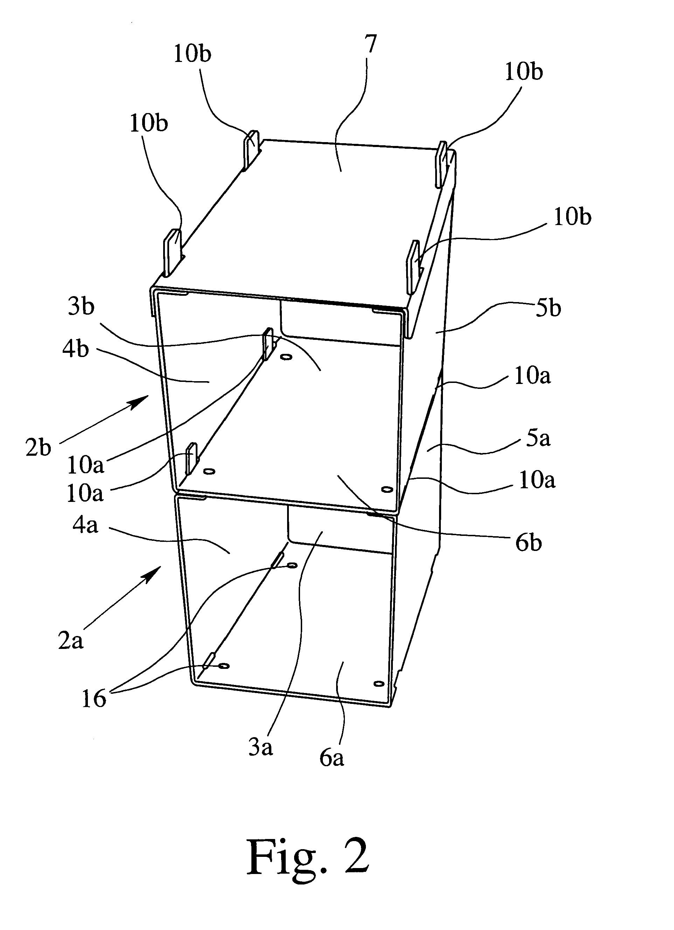

In Fig. 1 ist eine Kabelabschottung 1 im nicht-montierten Zustand vor dem Einsetzen in einen Wand- oder Deckendurchbruch eines Raums dargestellt, wobei die Kabelabschottung 1 für eine brandschutzsichere Abschottung von nicht dargestellten Leitungen, insbesondere elektrischen Kabeln, Rohren, Schläuchen oder dergleichen, im Bereich des Wand- oder Deckendurchbruchs ausgebildet ist. Die Kabelabschottung 1 weist bei der dargestellten Ausführungsform im montierten Zustand beispielsweise zwei Kabelboxen 2a, 2b auf, was in Fig. 2 dargestellt ist. Die Kabelboxen 2a, 2b durchsetzen die Wand oder Decke im Bereich des Durchbruchs kanalartig, wobei die Kabelboxen 2a, 2b bei der dargestellten Ausführungsform übereinander angeordnet sind. Grundsätzlich ist es aber auch möglich, eine beliebige Anzahl von Kabelboxen 2a, 2b übereinander und/oder nebeneinander anzuordnen. Jede Kabelbox 2a, 2b weist einen Kanal 3a, 3b zur Durchführung von Leitungen oder Rohren durch die Wand oder Decke auf, wobei die Kanäle 3 durch Gehäusewände 4a, 4b, 5a, 5b, 6a, 6b, 7 der Kabelboxen 2a, 2b begrenzt und von einander getrennt sind. Im übrigen sind die Kabelboxen 2a, 2b in ihrer Lage zueinander fixiert und untereinander verbunden.

Bei der dargestellten Ausführungsform werden die Kabelboxen 2a, 2b durch zwei miteinander verbundene trogförmige bzw. U-förmige Gehäuseteile 8a, 8b und einen oberen Gehäusedeckel 9 gebildet. Es versteht sich, daß die Anzahl und die Anordnung der Gehäuseteile 8a, 8b und auch die Anzahl der Gehäusedeckel 9 grundsätzlich bedarfsweise anpaßbar ist. Beispielsweise kann auch vorgesehen sein, daß jede Kabelbox 2a, 2b aus einem Gehäuseteil 8a, 8b und einem Gehäusedeckel 9 gebildet wird. Bei der dargestellten Ausführungform wird die untere Kabelbox 2a durch das untere Gehäuseteil 8a und die Bodenwand 6b des oberen Gehäuseteils 8b gebildet, während die obere Kabelbox 2b durch das obere Gehäuseteil 8b und die Deckelwand 7 des Gehäusedeckels 9 gebildet wird. Dies führt zu einem materialsparenden Aufbau.

Um eine einfache und kostengünstige Montage der dargestellten Kabelabschottung 1 bei hoher Stabilität zu ermöglichen, weisen die Gehäuseteile 8a, 8b eine Mehrzahl von Laschen 10a, 10b sowie eine Mehrzahl von Schlitzen 11 a auf. Der Gehäusedeckel 9 weist eine Mehrzahl von Schlitzen 11b auf. Die Laschen 10a des unteren Gehäuseteils 8a lassen sich dabei in Schlitze 11a des oberen Gehäuseteils 8b einstecken, so daß zwischen einer Bodenwand 6a und Seitenwänden 4a, 5a des ersten unteren Gehäuseteils 8a und einer darüber angeordneten Bodenwand 6b des zweiten oberen Gehäuseteils 8b ein Kanal 3a zur Durchführung von Leitungen oder Rohren gebildet wird. Zwischen der Bodenwand 6b des oberen zweiten Gehäuseteils 8b, den beiden Seitenwänden 4b, 5b des oberen Gehäuseteils 8b und einer Deckelwand 7 des Gehäusedekkels 9 wird der Kanal 3b gebildet. Im Ergebnis sind die Seitenwände 4a, 4b bzw. 5a, 5b der Gehäuseteile 8a, 8b einerseits und die Seitenwände 4b, 5b des oberen Gehäuseteils 8b und die Deckelwand 7 des Gehäusedeckels 9 unmittelbar form- und kraftschlüssig miteinander verbunden, wobei die Gehäusewände 4a, 4b, 5a, 5b, 6b, 7 durch eine Steckverbindung in ihrer Lage zueinander fixiert und miteinander verbunden sind. Da die Gehäuseteile 8a, 8b baugleich ausgebildet sind, können bedarfsweise auch mehr als zwei Gehäuseteile 8a, 8b übereinander angeordnet und miteinander über die dargestellte Steckverbindung verbunden werden.

Nicht dargestellt ist, daß auf den Innenseiten der Gehäusewände 4a, 4b, 5a, 5b, 6a, 6b, 7 eine Beschichtung mit einem intumeszierenden Brandschutzmaterial vorgesehen sein kann. Werden die Kabelboxen 2a, 2b über- und nebeneinander angeordnet, so kann zwischen den Seitenwänden 4a, 4b, 5a, 5b von seitlich benachbarten Kabelboxen 2a, 2b ebenfalls ein Brandschutzmaterial vorgesehen sein. Im übrigen kann auf der Außenseite einer außenliegenden Kabelbox 2a, 2b, an die keine weitere Kabelbox 2a, 2b angrenzt, eine Gipsschicht vorgesehen sein, was die Brandschutzwirkung weiter erhöht.

Bei der dargestellten Kabelabschottung 1 sind die Laschen 10a an den Seitenwänden 4a, 5a des unteren Gehäuseteils 8a in komplementär zu den Laschen 10a angeordnete Schlitze 11a des oberen zweiten Gehäuseteils 8b form- und kraftschlüssig einsteckbar. Dadurch wird eine sichere Fixierung und Befestigung der Gehäuseteile 8a, 8b erreicht. Zudem wird ein Verzug der Gehäuseteile 8a, 8b bei Brandeinwirkung weitgehend verringert. An den Gehäusewänden 4b, 5b sind ebenfalls Laschen 10b vorgesehen, die in komplementär zu den Laschen 10b angeordnete Schlitze 11b des Gehäusedeckels 9 form- und kraftschlüssig einsteckbar sind. Dadurch läßt sich der Gehäusedeckel 9 als oberer oder seitlicher Abschluß für ein außenliegendes Gehäuseteil 8b vorsehen.

Wie sich aus Fig. 1 ergibt, ist eine Mehrzahl von Laschen 10a, 10b und Schlitzen 11 a an gegenüberliegenden Längsseiten der Kabelboxen 2a, 2b vorgesehen. Der Gehäusedeckel 9 weist ebenfalls auf gegenüberliegenden Längsseiten komplementär zu den Laschen 10b angeordnete Schlitze 11b auf. Durch die form- und kraftschlüssige Verbindung zwischen den Gehäuseteilen 8a, 8b und dem Gehäusedeckel 9 an mehreren Verbindungsstellen ist ein stabiler Aufbau der Kabelabschottung 1 bei hoher Festigkeit der Steckverbindung sichergestellt.

Wie sich insbesondere aus Fig. 2 ergibt, lassen sich die Laschen 10a von außen durch die Schlitze 11 a hindurch in den Kanal 3b der oberen Kabelbox 2b einstecken. Gleiches gilt für die Laschen 10b, wobei der Gehäusedeckel 9 von oben auf das obere Gehäuseteil 8b aufgesetzt werden kann, so daß die Laschen 10b die Schlitze 11b durchdringen. Da die Deckelwand 7 des Gehäusedeckels 9 an den Längsrändern abgewinkelt ist, sind im montierten Zustand die Seitenwände 4b, 5b des oberen Gehäuseteils 8b im oberen Randbereich von den abgewinkelten Längsrändern des Gehäusedeckels 9 umfaßt. Dadurch wird die Stabilität der Kabelabschottung 1 weiter verbessert.

In Fig. 2 ist nicht dargestellt, daß am Ende der Montage der Kabelabschottung 1 die Laschen 10a, 10b zumindest teilweise umgebogen bzw. abgewinkelt werden können, um die Festigkeit der Steckverbindung weiter zu erhöhen. Insbesondere die Laschen 10b werden zur Fixierung des Gehäusedeckels 9 umgebogen.

Die Laschen 10a, 10b und die Gehäusewände 4a, 4b, 5a, 5b sind vorzugsweise einstückig ausgebildet, wobei die Laschen 10a, 10b durch einen Flächenbereich der Gehäusewände 4a, 4b, 5a, 5b gebildet werden. Grundsätzlich ist es natürlich auch möglich, Laschen von außen an die Gehäusewände 4a, 4b, 5a, 5b anzusetzen, wobei die Laschen insbesondere stoffschlüssig mit den Gehäusewänden 4a, 4b, 5a, 5b verbunden sein können.

Wie sich insbesondere aus Fig. 1 ergibt, sind die Laschen 10a, 10b als stegförmige Fortsätze einer Seitenwand 4a, 4b, 5a, 5b an der äußeren Längskante 12a, 12b der Seitenwand 4a, 4b, 5a, 5b ausgebildet. Im Bereich der durch die aufeinander zulaufenden Seitenwände 4a, 4b, 5a, 5b und Bodenwände 6a, 6b gebildeten unteren Längskanten 13a, 13b sind die Schlitze 11 a vorgesehen, wobei die Schlitze 11a und die Laschen 10a, 10b mit Bezug auf die Seitenwände 4a, 4b, 5a, 5b jeweils auf einer gemeinsamen Querachse X₁, X₂ angeordnet sind.

Um das Einstecken der Laschen 10a, 10b in die Schlitze 11 a zu vereinfachen, ist eine ausreichende Breite der Schlitze 11a erforderlich. Dabei werden die Schlitze 11a vorzugsweise gebildet durch eine Durchbrechung in der Längskante 13a, 13b, die sich von einer Seitenwand 4a, 4b, 5a, 5b zu einer Bodenwand 6a, 6b erstreckt. Die Länge und Breite der Schlitze 11 a ist vorzugsweise so gewählt, daß ein kraftschlüssiges Einstecken der Laschen 10a, 10b möglich ist. Das gleiche gilt im übrigen im Zusammenhang mit der Ausbildung der Schlitze 11b an Längskanten 14 des Gehäusedeckels 9. Durch die Anordnung der Laschen 10a, 10b und Schlitze 11 a, 11b im Bereich der Längskanten 12a, 12b, 13a, 13b, 14 wird sichergestellt, daß durch die gewählte Steckverbindung die Leitungsverlegung nicht behindert wird. Es versteht sich, daß die Laschen 10a, 10b grundsätzlich auch eine andere Kontur aufweisen können. Im übrigen können die Außenecken der Laschen 10a, 10b in Längsrichtung der Gehäuseteile 8a, 8b abgeschrägt sein, um das Einstecken zu erleichtern.

Um den Kraftschluß zu verstärken, können die Laschen 10a, 10b im nicht montierten Grundzustand der Gehäuseteile 8a, 8b geringfügig nach außen gebogen sein. Im montierten Zustand können die Laschen 10a mit den Außenflächen gegen Innenflächen der Seitenwände 4b, 5b anliegen.

Die Laschen 10a, 10b sind bei der dargestellten Ausführungsform erhältlich durch Einschneiden oder Einstanzen eines äußeren Längsrandes der Seitenwände 4a, 4b, 5a, 5b quer zur Längsrichtung der Seitenwände 4a, 4b, 5a, 5b und anschließendes Umbiegen der zu den Laschen 10a, 10b seitlich benachbarten Bereiche 15 des Längsrandes. Durch Umbiegen der Bereiche 15 wird eine flanschartige Auflagefläche an dem unteren Gehäuseteil 8a für das obere Gehäuseteil 8b geschaffen, wobei sich die Bodenwand 6b des oberen Gehäuseteils 8b auf den Bereichen 15 des unteren Gehäuseteils 8a abstützt. Auch dies trägt zu einer hohen Stabilität der beschriebenen Kabelabschottung 1 bei. Nicht dargestellt ist, daß die Laschen 10a, 10b auch durch bereichsweises Ausstanzen des Längsrandes der Seitenwand 4a, 4b, 5a, 5b ausgebildet werden können.

Nicht dargestellt ist im übrigen, daß Laschen auch durch Einschneiden oder Einstanzen der Gehäusewände 4a, 4b, 5a, 5b, 6a, 6b, 7 entlang einer eine Lasche begrenzenden vorzugsweise U-förmigen Konturlinie und anschließendes Aufbiegen des von der Konturlinie begrenzten U-förmigen Flächenbereichs der Gehäusewand 4a, 4b, 5a, 5b, 6a, 6b, 7 erhältlich sind. Die Laschen müssen dabei nicht im Bereich der Längskanten angeordnet sein.

Nicht dargestellt ist auch, daß zusätzlich zu den dargestellten zumindest im nicht montierten Grundzustand der Kabelabschottung 1 im wesentlichen in einer gleichen Ebene mit den Gehäusewänden 4a, 4b, 5a, 5b angeordneten Laschen 10a, 10b weitere Laschen vorgesehen sein können, die im wesentlichen senkrecht zu den Gehäusewänden 4a, 4b, 5a, 5b angeordnet sind. Dadurch ist eine seitliche Verbindung der Gehäuseteile 8a, 8b mit weiteren vorzugsweise identisch ausgebildeten Gehäuseteilen 8a, 8b über Steckverbindungen möglich.

Auch können an den Längskanten 12a, 12b, 13a, 13b in Längsrichtung vorzugsweise abwechselnd nebeneinander liegend Laschen und Schlitze vorgesehen sein. Auch die Breite und Form der Laschen und Schlitze ist bedarfsweise anpaßbar. Der modulare Aufbau der beschriebenen Kabelabschottung 1 erlaubt es, in einfacher Weise und kostengünstig die Querschnittsfläche der Kabelabschottung 1 bedarfsweise an die Größe des jeweiligen Wand- oder Dekkendurchbruchs anzupassen.

Die Gehäuseteile 8a und 8b weisen Löcher 16 in den Bodenwänden 6a, 6b auf, die zum Verschrauben der Gehäuseteile 8a, 8b zusätzlich zu der Steckverbindung vorgesehen sein können. Die Löcher 16 können auch an den Seitenwänden vorgesehen sein, um Kabelboxen 2a, 2b seitlich miteinander zu verbinden.

Darüber hinaus ist nicht dargestellt, daß die Bodenwände 6a, 6b und/oder die Seitenwände 4a, 4b, 5a, 5b sowie die Deckelwand 7 eine sich vorzugsweise über die gesamte Breite einer Wand 4a, 4b, 5a, 5b, 6a, 6b, 7a, insbesondere im mittleren Bereich der Wand 4a, 4b, 5a, 5b, 6a, 6b, 7a erstreckende Lochung mit einer Mehrzahl von Löchern aufweisen können. Die Lochung hat den Sinn, den Wärmedurchgang durch das Gehäuse zu reduzieren. Die die Lochung bildenden Löcher weisen vorzugsweise einen gleichen Durchmesser auf und sind in regelmäßigen Mustern angeordnet. Die Querschnittsfläche eines Lochs kann zwischen 30 bis 90 mm² betragen. Der Gesamtflächenanteil der Löcher an der Grundfläche einer Wand 4a, 4b, 5a, 5b, 6a, 6b, 7a kann zwischen 5 bis 25 % betragen. Dadurch sind zum einen eine hohe Biegesteifigkeit einer Wand 4a, 4b, 5a, 5b, 6a, 6b, 7a und zum anderen ein hoher Wärmedurchgang durch das Gehäuse gewährleistet.

## Patentansprüche

1. Kabelabschottung (1) mit modularem Aufbau zum Einsetzen in einen Wand- oder Deckendurchbruch eines Raums für die brandschutzsichere Abschottung von Leitungen, insbesondere elektrischen Kabeln, Rohren oder dergleichen im Bereich des Wand- oder Deckendurchbruchs, aufweisend wenigstens zwei die Wand oder Decke im Bereich des Durchbruchs kanalartig durchsetzende Kabelboxen (2a, 2b), wobei die Kabelboxen (2a, 2b) übereinander und/oder nebeneinander angeordnet sind und jede Kabelbox (2a, 2b) einen Kanal (3a, 3b) zur Durchführung von Leitungen oder Rohren aufweist, wobei die Kanäle (3a, 3b) durch Gehäusewände (4a, 4b, 5a, 5b, 6a, 6b, 7) der Kabelboxen (2a, 2b) gebildet und voneinander getrennt sind und wobei die Kabelboxen (2a, 2b) in ihrer Lage zueinander fixiert und untereinander verbunden sind, **dadurch gekennzeichnet, daß** wenigstens eine Gehäusewand (4a, 5a) einer ersten Kabelbox (2a) unmittelbar form- und/oder kraftschlüssig mit wenigstens einer Gehäusewand (4b, 5b, 6b) wenigstens einer weiteren Kabelbox (2b) verbunden ist.

2. Kabelabschottung nach Anspruch 1, **dadurch gekennzeichnet, daß** die Gehäusewände (4a, 4b, 5a, 5b, 6a, 6b, 7) über eine Steckverbindung miteinander verbindbar sind.

3. Kabelabschottung nach Anspruch 1 oder 2, **dadurch gekennzeichnet, daß** wenigstens eine Lasche (10a) an wenigstens einer Gehäusewand (4a, 5a) einer ersten Kabelbox (2a) in einen komplementär zu der Lasche (10a) angeordneten Schlitz (11a) in einer Gehäusewand (4b, 5b, 6b) einer weiteren Kabelbox (2b) form- und kraftschlüssig einsteckbar ist.

4. Kabelabschottung nach einem der vorhergehenden Ansprüche, **dadurch gekennzeichnet, daß** eine Mehrzahl von Laschen (10a, 10b) und/oder Schlitzen (11a, 11b) vorgesehen ist und daß Kabelboxen (2a, 2b) auf jeder Längsseite an wenigstens zwei Verbindungsstellen verbunden sind.

5. Kabelabschottung nach einem der vorhergehenden Ansprüche, **dadurch gekennzeichnet, daß** eine Lasche (10a) an der Gehäusewand (4a, 5a) einer ersten Kabelbox (2a) von außen durch den Schlitz (11a) in der Gehäusewand (4b, 5b, 6b) einer weiteren Kabelbox (2b) hindurch in den Kanal (3b) der weiteren Kabelbox (2b) einsteckbar ist.

6. Kabelabschottung nach einem der vorhergehenden Ansprüche, **dadurch gekennzeichnet, daß** die Lasche (10a, 10b) und die Gehäusewand (4a, 4b, 5a, 5b) einstückig ausgebildet sind, wobei die Lasche (10a, 10b) durch einen Flächenbereich der Gehäusewand (4a, 4b, 5a, 5b) gebildet wird.

7. Kabelabschottung nach einem der vorhergehenden Ansprüche, **dadurch gekennzeichnet, daß** die Lasche (10a, 10b) als stegförmiger nach außen überstehender Fortsatz der Gehäusewand (4a, 4b, 5a, 5b) an einer ersten Längskante (12a, 12b) der Gehäusewand (4a, 4b, 5a, 5b) ausgebildet ist.

8. Kabelabschottung nach Anspruch 7, **dadurch gekennzeichnet, daß** an einer der ersten Längskante (12a, 12b) gegenüberliegenden zweiten Längskante (13a, 13b) einer Gehäusewand (4a, 4b, 5a, 5b, 6a, 6b) wenigstens ein Schlitz (11a) vorgesehen ist, wobei die Lasche (10a, 10b) an der ersten Längskante (12a, 12b) und der Schlitz (11a) an der zweiten Längskante (13a, 13b) auf einer gemeinsamen Querachse (X_{1,} X₂) angeordnet sind.

9. Kabelabschottung nach einem der vorhergehenden Ansprüche, **dadurch gekennzeichnet, daß** die Lasche erhältlich ist durch Einschneiden oder Einstanzen eines Längsrandes der Gehäusewand (4a, 4b, 5a, 5b) quer zur Längsrichtung der Gehäusewand (4a, 4b, 5a, 5b) und anschließendes Umbiegen der zur Lasche (10a, 10b) seitlich benachbarten Bereiche des Längsrandes oder durch bereichsweises Ausstanzen des Längsrandes.

10. Kabelabschottung nach einem der vorhergehenden Ansprüche, **dadurch gekennzeichnet, daß** die Lasche (10a, 10b) erhältlich ist durch Einschneiden oder Einstanzen der Gehäusewand (4a, 4b, 5a, 5b) entlang einer die Lasche begrenzenden vorzugsweise U-förmigen Konturlinie und anschließendes Aufbiegen des von der Konturlinie begrenzten U-förmigen Flächenbereichs der Gehäusewand.

11. Kabelabschottung nach einem der vorhergehenden Ansprüche, **dadurch gekennzeichnet, daß** die Lasche (10a, 10b) und die Gehäusewand (4a, 4b, 5a, 5b) zumindest in einem nicht montierten Grundzustand der Kabelabschottung im wesentlichen in einer gleichen Ebene angeordnet sind und daß, vorzugsweise, die Lasche (10a, 10b) in einem Montagezustand der Kabelabschottung bei verbundenen Gehäusewänden (4a, 4b, 5a, 5b) gegenüber der Ebene der Gehäusewand (4a, 4b, 5a, 5b) abgewinkelt bzw. umgebogen ist.

12. Kabelabschottung nach einem der vorhergehenden Ansprüche, **dadurch gekennzeichnet, daß** wenigstens zwei trogförmige Gehäuseteile (8a, 8b) vorgesehen sind, wobei die Gehäuseteile (8a, 8b) durch Einstecken von Laschen (10a) eines ersten Gehäuseteils (8a) in Schlitze (11a) eines zweiten Gehäuseteils (8b) miteinander verbindbar sind, so daß zwischen einer Bodenwand (6a) und Seitenwänden (4a, 5a) eines ersten Gehäuseteils (8a) und einer Bodenwand (6b) eines zweiten Gehäuseteils (8b) ein Kanal (3a) zur Durchführung von Leitungen oder Rohren gebildet wird.

13. Kabelabschottung nach einem der vorhergehenden Ansprüche, **dadurch gekennzeichnet, daß** an den freien Längskanten (12a, 12b) von Seitenwänden (4a, 4b, 5a, 5b) des Gehäuseteils (8a, 8b) Laschen (10a, 10b) und an den bodenbenachbarten Längskanten (13a, 13b) des Gehäuseteils (8a, 8b) Schlitze (11a) vorgesehen sind.

14. Kabelabschottung nach einem der vorhergehenden Ansprüche, **dadurch gekennzeichnet, daß** die Längsränder der Seitenwände (4a, 4b, 5a, 5b) des Gehäuseteils (8a, 8b) zur Ausbildung einer flanschartigen Auflagefläche bereichsweise nach innen umgebogen sind.

15. Kabelabschottung nach einem der vorhergehenden Ansprüche, **dadurch gekennzeichnet, daß** der Gehäusedeckel (9) an den äußeren Längskanten (14) Schlitze (11b) aufweist, wobei die Schlitze (11b) komplementär zu den Laschen (10a, 10b) an den Seitenwänden (4a, 4b, 5a, 5b) des Gehäuseteils (8a, 8b) angeordnet sind, so daß der Gehäusedeckel (9) als oberer oder seitlicher Abschluß für ein außenliegendes Gehäuseteil (8b) vorgesehen ist und durch Einstecken der Laschen (10b) des außenliegenden Gehäuseteils (8b) in die Schlitze (11b) des Gehäusedeckels (9) mit dem außenliegenden Gehäuseteil (8b) verbindbar ist.
